# EUROPÄISCHE PATENTSCHRIFT

(11) **EP 1 399 626 B1**
(45) Veröffentlichungstag und Bekanntmachung des Hinweises auf die Patenterteilung: **20.04.2016**
(21) Anmeldenummer: 02729755.5
(22) Anmeldetag: 14.06.2002
(51) Int. Cl.: E02B 3/10

(54) **DÄMMELEMENT, VERFAHREN ZUR VERWENDUNG VON DÄMMELEMENTEN SOWIE DÄMMEINRICHTUNGEN**
DAM ELEMENT, METHOD FOR USING DAM ELEMENTS AND DAM DEVICE
ÉLÉMENT D'ENDIGUEMENT, PROCÉDÉ D'UTILISATION D'ÉLÉMENTS D'ENDIGUEMENT ET DISPOSITIFS D'ENDIGUEMENT

(30) Priorität: 18.06.2001 CH 110901
(43) Veröffentlichungstag der Anmeldung: 24.03.2004
(73) Patentinhaber: Beaver Schutzsysteme AG, 6022 Grosswangen (CH)
(72) Erfinder: Sager, Bruno, 6123 Geiss (CH)
(74) Vertreter: Wagner, Wolfgang Heribert
(86) Internationale Anmeldenummer: PCT/CH2002/000324
(87) Internationale Veröffentlichungsnummer: WO 2002/103120

(56) Entgegenhaltungen:
- WO-A-01/29327
- WO-A-99/41459
- DE-A- 2 136 619
- US-A- 5 584 599
- US-A- 5 993 113

## Beschreibung

### Technisches Gebiet

Die Erfindung betrifft ein Dämmelement gemäss dem Oberbegriff des Anspruchs 1, ein Verfahren zu seiner Verwendung sowie derartige Dämmelemente umfassende Dämmeinrichtungen. Dämmelemente und Dämmeinrichtungen dieser Art werden zur Eindämmung von Flüssigkeiten, insbesondere von Wasser bei Ueberschwemmungen eingesetzt.

### Stand der Technik

Ein gattungsgemässes Dämmelement ist aus DE-A-21 36 619 bekannt. Dieses Dämmelement, das für die Eindämmung von aus einem leckgeschlagenen Tanker ausgetretenem Oel auf einer Wasserfläche vorgesehen ist, weist einen mittigen Schlauchabschnitt und an seinen Enden gerade kegelförmige Endabschnitte mit Endöffnungen auf. Aufeinanderfolgende Dämmelemente werden an den Endöffnungen miteinander verbunden. Derartige Dämmelemente sind für den Einsatz bei Ueberschwemmungen ungeeignet, schon weil aus ihnen aufgebaute Dämmeinrichtungen an den Stossstellen zwischen aneinander anschliessenden Dämmelementen nicht dicht sind. Die Stossstellen scheinen auch wenig belastbar, sodass die Dämmelemente dort leicht auseinandergerissen werden können.

Aus US-A-5 865 564 ist ein gattungsgemässes Dämmelement bekannt, welches als Schlauchabschnitt ausgebildet ist, mit durch eine Zwischenwand aufrechterhaltenem abgeflachtem Querschnitt, welcher ein Wegrollen unter einseitig einwirkendem Wasserdruck verhindern soll. Der Verschluss der Schlauchabschnitte ist durch Zurückschlagen eines Endabschnitts unter denselben oder über denselben mit nachfolgender Fixierung durch einen Gurt hergestellt. Es scheint zweifelhaft, ob ein solcher Verschluss zuverlässig und ausreichend dicht ist. Ausserdem dürften beim Füllen des Dämmelements Schwierigkeiten auftreten, da der Verschluss erst bei hohem Füllungsgrad voll wirksam wird. In Längsrichtung aufeinanderfolgende Dämmelemente stossen mit den Enden aneinander und sind durch eine Verbindungsplane, welche unter den Endabschnitten der Dämmelemente durchgezogen ist und deren Ränder durch oben über dieselben laufende Gurtstücke verhängt sind, verbunden. Diese Verbindung scheint nicht unbedingt geeignet, grossen Kräften standzuhalten.

Ein aus der WO-A-99/41 459 bekanntes Dämmelement ist ebenfalls als Schlauchabschnitt ausgebildet, der im Inneren zur Stabilisierung der Form und besseren Verteilung angreifender Kräfte eine auf halber Höhe angeordnete durchgehende Membran aufweist. Die Endabschnitte sind halbkugelig ausgebildet und fest verschlossen und können wie beim vorstehend beschriebenen Dämmelement zurückgeschlagen und zum Schutz der Endnaht durch eine Manschette zusammengehalten werden, was verhältnismässig umständlich ist. Dämmelemente der beschriebenen Art werden zur Herstellung einer Dämmeinrichtung nebeneinander und übereinander sowie in Längsrichtung aufeinanderfolgend angeordnet und verbunden. Die Verbindung in Längsrichtung erfolgt etwa durch Ineinanderfalten der Endstücke in einer Manschette, so dass sie sich beim Auffüllen in derselben verkeilen. Aufeinanderfolgende Dämmelemente können also überlappen, doch ist die Form der Endabschnitte und ihrer Ueberlappungen nicht durch die Ausbildung der Dämmelemente definiert, sondern stark davon abhängig, in welcher Weise und in welcher Reihenfolge sie gefüllt werden. Die Verbindung ist jedenfalls schwierig herzustellen und erfordert viel Platz und zusätzliche Elemente von verhältnismässig grossen Abmessungen.

Aus WO-A-01/29 237 ist ein weiteres Dämmelement bekannt, bei welchem der Schlauchabschnitt an beiden Enden durch runde Deckel verschlossen ist. Dieser Verschluss ist zwar zuverlässig, aber verhältnismässig aufwendig in der Herstellung. Stossstellen zwischen in Längsrichtung aufeinanderfolgenden Dämmelementen sind nicht ohne weiteres dicht.

Gemäss US-A-5 993 113 werden ebenfalls Dämmelemente eingesetzt, welche als an den Enden durch runde Deckel verschlossene Schlauchabschnitte ausgebildet sind. Sie werden mittels separater zylindrischer Verbindungsteile zu Dämmeinrichtungen verbunden, was deren Aufbau und dementsprechend die Handhabung der Dämmelemente kompliziert.

Aus der US-A-5 059 065 ist ein Dämmelement bekannt, bei welchem zwei wassergefüllte innere Schlauchabschnitte nebeneinander in einem äusseren Schlauchabschnitt angeordnet sind. In Längsrichtung aufeinanderfolgende Dämmelementen sind durch eine Verbindungsmuffe verbunden, die die Stirnenden der Dämmelemente sowie den Abstand zwischen denselben ausfüllende Füllelemente, welche als wassergefüllte Säcke ausgebildet sind, aufnimmt. Die Dämmelemente sind verhältnismässig kompliziert aufgebaut und schwer zu handhaben. Die Verbindung in Längsrichtung aufeinanderfolgender Dämmelemente ist kompliziert und erfordert zusätzliche Elemente.

Aus der DE-A-36 04 015 ist ein Dämmelement vor allem für den Küstenschutz bekannt, welches aus einem Schlauchabschnitt besteht, der mit Wasser gefüllt wird. Es ist nicht klar, wie die Schlauchabschnitte an den Enden verschlossen sind. Eine Verbindung aufeinanderfolgender Dämmelemente ist nicht ersichtlich.

Ein weiteres Dämmelement ist aus DE-A-41 00 889 bekannt. Es ist als Doppelschlauch aus zwei längs einer Mantellinie verbundenen Schläuchen ausgebildet, welcher auf einer Haspel aufgewickel ist, von der er bei Bedarf abgewickelt und mit Wasser gefüllt wird. Eingesetzt wird es vor allem auf Deichkronen an Küsten und Ufern. Wegen seiner grossen Länge ist ein solches Dämmelement auch im ungefüllten Zustand zwangsläufig sehr schwer und entsprechend schwierig sind Transport und Handhabung.

Die als an den Enden verschlossene Schlauchabschnitte ausgebildeten Dämmelemente sind durchwegs schwer vollständig zu entleeren, so dass gewöhnlich nach dem Einsatz Restfeuchte zurückbleibt. Dies kann zu Mikroben- und Pilzbefall und in der Folge zur Versprödung des Materials führen.

### Darstellung der Erfindung

Der Erfindung liegt die Aufgabe zu Grunde, ein gattungsgemässes Dämmelement anzugeben, das bequem zu warten sowie einfach einzusetzen und funktionssicher ist und das insbesondere eine einfach herstellbare und zuverlässige Verbindung in Längsrichtung aufeinanderfolgender Dämmelemente ermöglicht.

Diese Aufgabe wird durch die Merkmale im Kennzeichen des Anspruchs 1 gelöst. An einer Stossstelle zwischen zwei Dämmelementen kann ein Endabschnitt des einen Dämmelements überlappend mit dem Endabschnitt des anderen Dämmelements in die Manschette desselben eingeschoben werden, sodass die beiden Endabschnitte nach dem Befüllen der Dämmelemente gegeneinander und gegen die Innenseite der Manschette drücken und dadurch fest zusammengehalten werden. Ein Auseinanderreissen der Dämmelemente ist, auch wenn grosse Kräfte auftreten, kaum möglich. Die Verbindung kann rasch und mühelos hergestellt werden und erfordert keine weiteren Elemente. Die Ausbildung der Stossstellen ist weniger vom Vorgehen beim Füllen der Dämmelemente abhängig, was deren Einsatz erleichtert.

Das erfindungsgemässe Dämmelement kann an den Enden geöffnet und zuverlässig wieder verschlossen werden. Dies ermöglicht eine vollständige Entleerung und Trocknung nach dem Einsatz, so dass keine Gefahr eines Mikroben- oder Pilzbefalls besteht, der sonst leicht zur Verrottung oder Versprödung des Materials führen könnte.

Weiter wird ein Verfahren zum Einsatz gattungsgemässer Dämmelemente angegeben sowie Dämmeinrichtungen, die aus gattungsgemässen Dämmelementen aufgebaut sind.

### Kurze Beschreibung der Zeichnungen

Im folgenden wird die Erfindung anhand von Figuren, welche lediglich Ausführungsbeispiele darstellen, näher erläutert. Es zeigen
- Fig. 1: schematisch eine Draufsicht auf ein erfindungsgemässes Dämmelement gemäss einer ersten Ausführungsform, mit zwei versetzt nebeneinander angeordneten Schlauchabschnitten,
- Fig. 2: schematisch eine Seitenansicht des erfindungsgemässen Dämmelements gemäss der ersten Ausführungsform,
- Fig. 3: vergrössert ein Ende eines Schlauchabschnittes des erfindungsgemässen Dämmelements gemäss der ersten Ausführungsform mit Verschlussteil,
- Fig. 4: ein Netz eines Schlauchabschnittes des erfindungsgemässen Dämmelements gemäss der ersten Ausführungsform,
- Fig. 5: eine teilweise Vorderansicht des erfindungsgemässen Dämmelements gemäss der ersten Ausführungsform,
- Fig. 6: eine teilweise geschnittene Seitenansicht einer Stossstelle zwischen Schlauchabschnitten zweier in Längsrichtung aufeinanderfolgender erfindungsgemässer Dämmelemente gemäss der ersten Ausführungsform,
- Fig. 7: schematisch eine Draufsicht auf ein Ende einer erfindungsgemässen Dämmeinrichtung gemäss einer ersten Ausführungsform, welche mittels eines geeignet ausgebildeten Dämmelements an einer Mauer verankert ist,
- Fig. 8: in Seitenansicht die Verankerung des Dämmelements,
- Fig. 9: einen Schnitt längs IX-IX in Fig. 8,
- Fig. 10: schematisch einen Ausschnitt aus einer Draufsicht auf eine erfindungsgemässe Dämmeinrichtung gemäss einer zweiten Ausführungsform, aufgebaut aus Dämmelementen gemäss einer zweiten Ausführungsform sowie Zwischenelementen,
- Fig. 11: schematisch einen Schnitt längs XI-XI in Fig. 10,
- Fig. 12: vergrössert die Umgebung der Linie XI-XI in Fig. 10 und
- Fig. 13a-d: aufeinanderfolgende Stadien beim Aufbau der Dämmeinrichtung gemäss der zweiten Ausführungsform.

### Wege zur Ausführung der Erfindung

Gemäss einer ersten Ausführungsform weist das erfindungsgemässe Dämmelement einen ersten Schlauchabschnitt 1a und einen in Längsrichtung gegen denselben versetzten gleichen zweiten Schlauchabschnitt 1b auf, welche längs auf mittlerer Höhe einander gegenüberliegender Mantellinien mittels eines Stegs 2 miteinander verbunden sind. Der Steg 2 erstreckt sich über den Ueberlappungsbereich von Mittelabschnitten 3 der Schlauchabschnitte 1a,b, welche jeweils konstanten Durchmesser aufweisen und nach rechts weiter bis ans Ende des ersten Schlauchabschnitts 1a. An die Enden des Mittelabschnitts 3 schliessen jeweils zwei Endabschnitte 4, 5 an, welche sich mit zunehmender Entfernung von demselben verjüngen. Die Verjüngung den Endabschnitte 4, 5 erfolgt antisysmmetrisch nach entgegengesetzten Seiten, wie noch genauer erläutert wird.

An der Oberseite weist der Mittelabschnitt 3 in den Endbereichen zwei Entlüftungsöffnungen 6 auf, die durch Schraubverschlüsse verschlossen sind. Etwa in der Mitte des Mittelabschnitts 3 ist jeder Schlauchabschnitt 1a,b an der vom anderen Schlauchabschnitt abgewandten Seite auf halber Höhe mit einem Einfüllstutzen 7 versehen. Der Durchmesser des Mittelabschnitts 3 kann jeweils etwa zwischen 0,2 m und 2 m liegen, vorzugsweise liegt er zwischen 0,3 m und 1,2 m. Die Schlauchabschnitte 1a,b bestehen aus festem und wasserdichtem Gewebe, z. B. Polyester, das mit Kohlefasern verstärkt sein kann und beidseitig mit PVC oder Polyethylen beschichtet ist.

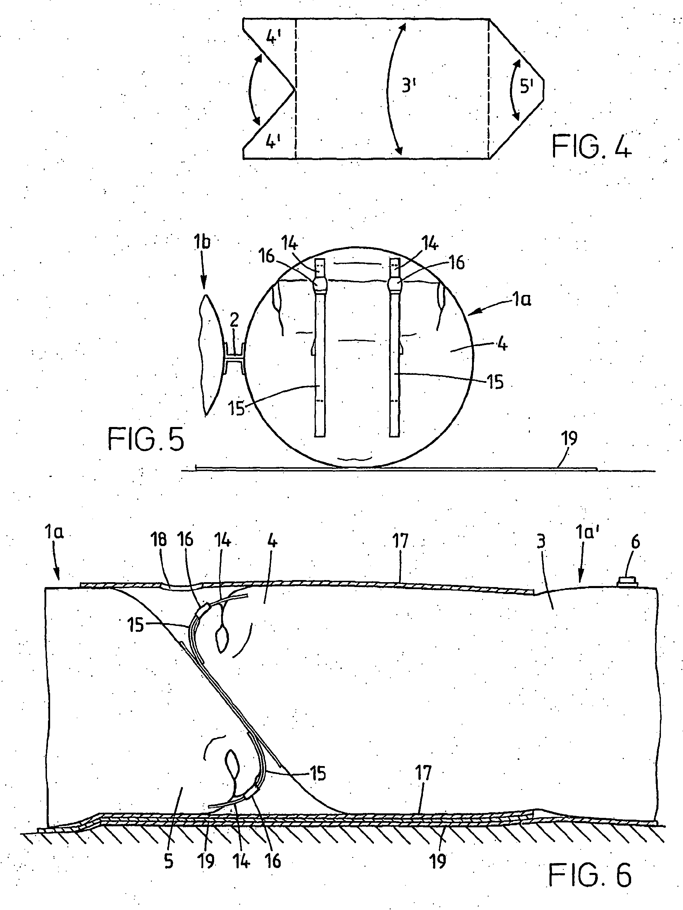

Beide Endabschnitte 4, 5 sind im übrigen gleich ausgebildet und verjüngen sich asymmetrisch bezüglich der Achse des Mittelabschnitts 3 derart, dass ihr Durchmesser nach allen Richtungen abnimmt. Vorzugsweise haben sie im wesentlichen die Form eines schiefen Kegels, wobei eine Mantellinie desselben die oberste bzw. die unterste Mantellinie des Mittelabschnitts 3 in gerader Linie fortsetzt. Dadurch kann der Schlauchabschnitt aus einem einfachen und stabilen Netz hergestellt werden, das in Fig. 4 dargestellt ist. Es weist einen rechteckigen Mittelteil 3' auf, das den Mittelabschnitt 3 bildet, einen gleichschenkligen dreieckigen Endteil 5', der den Endabschnitt 5 bildet und einen komplementären Endteil 4', der den Endabschnitt 4 bildet. Zur Herstellung eines Schlauchabschnitts brauchen jeweils nur die einander gegenüberliegenden Seiten des Netzes miteinander verschweisst zu werden. Dazu sind auf einer Seite überstehende Verbindungslaschen (nicht dargestellt) vorgesehen. Ein weiterer Vorteil der beschriebenen Ausbildung der Schlauchabschnitte 1a,b liegt darin, dass bei der Herstellung des Netzes nur wenig Abfall entsteht.

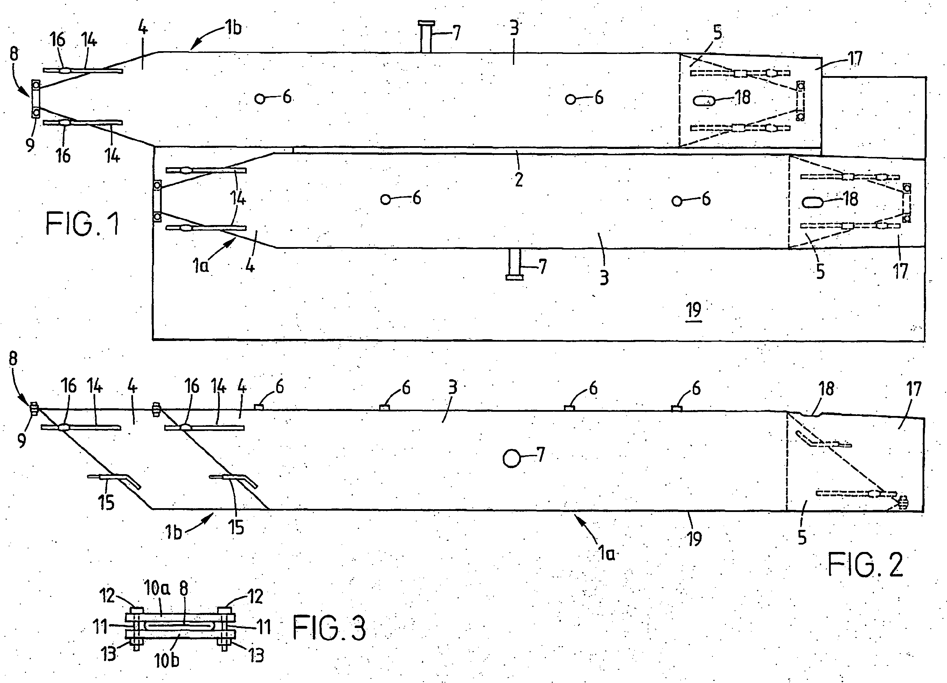

An seinem Ende weist (Fig. 3) jeder der Endabschnitte 4, 5 eine Endöffnung 8 auf, welche durch ein Verschlussteil 9 verschlossen ist. Die Endöffnung 8 ist so hergestellt, dass die Spitzen der Endteile 4', 5' des Netzes angeschnitten sind, so dass die Endabschnitte 4, 5 oben offene Kegelstümpfe bilden. Der Durchmesser der Endöffnung 8 beträgt höchstens 20%, in der Regel eher ca. 10% des Durchmessers des Mittelabschnitts 3. Das Verschlussteil 9 ist als Klemmteil ausgebildet, welches zwei Klemmplatten 10a,b aufweist, die gegeneinander gepresst werden können. Dazu weisen die Klemmplatten 10a,b in ihren Endbereichen Bohrungen auf, durch welche jeweils ein Schraubenbolzen 11 geführt ist, der mit seinem Kopf 12 an der Aussenseite der oberen Klemmplatte 10a anliegt und mit einer an der Aussenseite der unteren Klemmplatte 10b anliegenden als Rändelschraube ausgebildeten Mutter 13 eingreift. Zum Verschliessen der Endöffnung 8 wird deren Rand langgezogen, so das die beiden Hälften desselben aufeinanderliegen und zwischen die Klemmplatten 10a,b gelegt. Durch Drehen der Muttern 13 wird dann die untere Klemmplatte 10b gegen die obere Klemmplatte 10a gedrückt und der Rand der Endöffnung 8 geklemmt, so dass dieselbe dicht verschlossen ist. Das Verschlussteil 9 kann natürlich auch anders ausgebildet sein. So können etwa die Klemmplatten 10a,b durch ein Scharnier verbunden sein.

Zum Einsatz des Dämmelements werden die Endabschnitte 4, 5 an den Enden etwas eingerollt (s. a. Fig. 5, 6), und zwar jeweils nach der Aussenseite. Zur Fixierung in dieser Position weisen sie jeweils eine Haltevorrichtung auf mit zwei mit Abstand nebeneinander an der Oberseite bzw. Unterseite des Endabschnitts 4; 5 befestigten äusseren Riemen 14 und zwei ebenso an der Unterseite bzw. Oberseite befestigten inneren Riemen 15. Ein äusserer Riemen 14 ist jeweils durch eine Schnalle 16 o. dgl. mit dem gegenüberliegenden inneren Riemen 15 verbindbar. Die Schnallen 16 bestehen vorzugsweise aus Kunststoff und sind so ausgebildet, dass sie auch dann geöffnet werden können, wenn die Riemen 14, 15 unter Zug stehen. Schnallen des Typs SS40/H1-00099 der Firma KAHAGE GmbH, D-60334 Frankfurt haben sich als geeignet erwiesen. Nach dem Einrollen der Endabschnitte 4, 5 ist das Dämmelement leichter zu handhaben, ausserdem sind sowohl die Verschlussteile 9 geschützt als auch das Material der Schlauchabschnitte 1a,b etc. vor Verletzung durch dieselben. Bei geeigneten Materialeigenschaften kann auf das Einrollen der Endabschnitte 4, 5 auch verzichtet werden. In diesem Fall sind natürlich auch keine Haltevorrichtungen erforderlich.

Der Endabschnitt 5 ist von einer Manschette 17 Umgeben, die ihn etwas überragt. Ein an ihren Innenrand anschliessender umlaufender Streifen ist mit dem Endbereich des Mittelabschnitts 3 verschweisst. Der Durchmesser der Manschette 17 nimmt mit zunehmender Entfernung von demselben leicht ab, so dass der Durchmesser ihres Aussenrandes etwa 5% kleiner als der des Mittelabschnitts 3 ist. An der Oberseite weist die Manschette 17 nahe am Mittelabschnitt 3 ein Luftloch 18 auf. Sie besteht vorzugsweise aus dem gleichen Material wie die Schlauchabschnitte 1a,b. Längs des Aussenrandes ist sie verstärkt.

Das Dämmelement weist eine Bodenplane 19 auf, welche ebenfalls aus flexiblem, wasserdichtem Material besteht. Es kann sich um das gleiche Material handeln wie bei den Schlauchabschnitten 1a,b. Die Bodenplane 19 erstreckt sich im wesentlichen über die Länge des ersten Schlauchabschnitts 1a und ist mit dessen Mittelabschnitt 3 und dessen Manschette 17 jeweils längs der untersten Mantellinie dicht verbunden, vorzugsweise verschweisst. An der vom zweiten Schlauchabschnitt 1b abgewandten Seite ragt sie um mindestens die Hälfte seines Durchmessers über den ersten Schlauchabschnitt 1a hinaus. Auf der anderen Seite ragt sie mindestens über die Mitte des Schlauchabschnitts 1b hinaus, so dass derselbe mit dem die unterste Mantellinie umgebenden Bereich auf ihr aufliegt. Die Bodenplane 19 dient als Schutz vor Unterspülung der Schlauchabschnitte 1a,b sowie zum Schutz derselben gegen Verletzung durch scharfkantige Steine u. dgl.. Sie ist so lang, dass die Bodenplanen in Längsrichtung aufeinanderfolgender Dämmelemente stets zuverlässig überlappen.

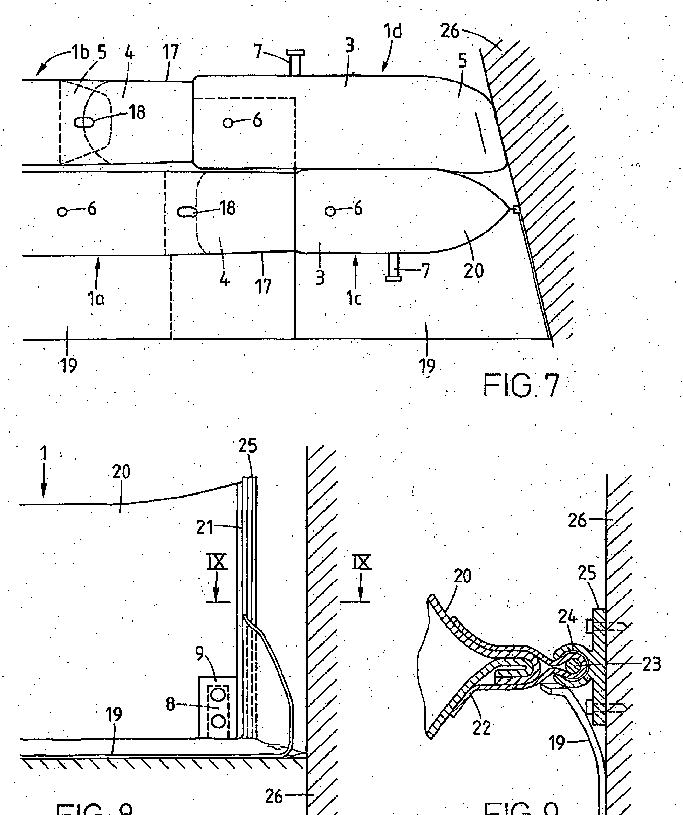

Es ist oft nützlich, die erfindungsgemässe Dämmeinrichtung einseitig z. B. an einem Gebäude verankern zu können. Es sind daher speziell für diesen Zweck ausgebildete Dämmelemente vorgesehen, die (Fig. 7-9) lediglich einen Schlauchabschnitt 1c umfassen, welcher aus einem Mittelabschnitt 3 und einem an einer Seite desselben anschliessenden Endabschnitt der beschriebenen Art besteht, während am gegenüberliegenden Ende des Mittelabschnitts 3 ein Anschlussabschnitt 20 anschliesst, der sich lediglich horizontal verjüngt, während sein senkrechter Durchmesser gleichbleibt oder sogar leicht zunimmt, bis der Anschlussabschnitt 20 in eine vertikale Endkante 21 ausläuft. Die Bodenplane 19 geht in Längsrichtung über die Endkante 21 hinaus, liegt aber lediglich auf einer Seite der untersten Mantellinie und der sie über das Ende des Schlauchabschnitts 1 hinaus fortsetzenden Linie. Knapp vor dem unteren Ende der Endkante 21 weist der Schlauchabschnitt eine Endöffnung 8 auf, welche als rechteckige Aussparung ausgebildet ist, die beidseits von der untersten Mantellinie aus einspringt. Sie wird ähnlich wie bei den Schlauchabschnitten 1a,b durch ein Verschlussteil 9 verschlossen, das ebenfalls als Klemmteil mit zwei mittels Schraubenbolzen gegeneinander pressbaren Klemmplatten ausgebildet ist, die über die Ränder der Endöffnung 8 hinausragen. Die Endöffnung kann auch lediglich als kurzer der untersten Mantellinie folgender Schlitz ausgebildet sein, oberhalb desselben Löcher für die Schraubenbolzen vorgesehen sind.

Es sind zwei Typen derartiger Dämmelemente vorgesehen, von denen der eine, wie in Fig. 7 dargestellt, einen den Endabschnitten 4 der Schlauchabschnitte 1a,b entsprechenden Endabschnitt 4 aufweist, während der andere einen den Endabschnitten 5 entsprechenden Endabschnitt aufweist. Der eine eignet sich zur Verbindung mit dem in Fig. 1, 2 rechten Ende, der andere zur Verbindung mit dem linken Ende des Schlauchabschnitts 1a.

Der dargestellte Schlauchabschnitt 1c kann aus einem Netz ähnlich dem in Fig. 4 dargestellten hergestellt werden, bei dem der Endteil 5' weggelassen ist und aus der so hergestellten geraden Abschlussseite des Mittelteils 3' mittig ein etwa keilförmiges Stück herausgeschnitten ist, so dass die unterste Mantellinie des Schlauchabschnitts 1 bis zur Endkante 21 gerade ist. Ausgehend von der so hergestellten Ausnehmung werden dann zur Herstellung der Endöffnung 8 noch beidseits rechteckige Stücke herausgeschnitten. Die Modifikation für die Herstellung eines Dämmelementes des anderen Typs ist entsprechend.

Der Anschlussabschnitt 20 weist am Ende eine über die Länge der Endkante 21 durchlaufende Verdickung auf, welche durch einen Streifen 22 hergestellt ist, dessen Ränder auf entgegengesetzten Seiten der Endkante 21 mit der Aussenseite des Anschlussabschnitts 20 verschweisst sind und der eine Seele 23 zur Herstellung der Verdickung umschliesst. Diese liegt in einer Kedernut 24 einer senkrechten Ankerschiene 25, welche z. B. mittels Schrauben an der Aussenseite einer Mauer 26 befestigt ist, während der überstehende Teil der Bodenplane 19 an derselben anliegt, was die Dichtigkeit an dieser Stelle wesentlich verbessert.

Ergänzt wird die Anordnung durch ein weiteres Dämmelement, das als Schlauchabschnitt 1d ausgebildet ist, der genau einem der Schlauchabschnitte 1a,b entspricht. Derartige Dämmelemente können in verschiedenen Längen vorgesehen sein. Die Länge muss nicht genau abgestimmt sein, da der Schlauchabschnitt 1d deformierbar ist und sich an den vorhandenen Platz anpasst. Vor allem wenn er in einem rechten oder stumpfen Winkel an eine Wand stösst, kann er bei Ueberlänge auch seitlich abgeknickt werden, ohne dass dies die Dämmwirkung beeinträchtigen würde. Allenfalls ist dann eine zusätzliche Befestigung am benachbarten Schlauchabschnitt 1c z. B. mittels eines Gurtes erforderlich.

Im Einsatz werden die Schlauchabschnitte 1a,b und gegebenenfalls 1c,d erst über die Anschlussstutzen 7 mit Luft gefüllt und die Dämmelemente derart im Gelände angeordnet, ausgerichtet, womöglich verankert und zu einer Dämmeinrichtung gemäss einer ersten Ausführungsform verbunden, dass die der einzudämmenden Flüssigkeit zugewandte Aussenseite stets von den jeweils mit der Bodenplane 19 verbundenen Schlauchabschnitten 1a gebildet wird.

Dabei kann mit verhältnismässig geringem Druck gearbeitet werden, so dass die Schlauchabschnitte flexibel sind. In diesem Zustand kann etwa der Endabschnitt 4 eines der Schlauchabschnitte 1a' (Fig. 6) eines weiteren Dämmelements in die Manschette 17 geschoben werden, welche den Endabschnitt 5 des Schlauchabschnitts 1a des voraufgehenden Dämmelements umgibt. Dabei kann durch das Luftloch 18 Luft aus der Manschette 17 entweichen. Die Endabschnitte 4, 5 können fest gegeneinandergedrückt werden, so dass sie dank ihrer komplementären asymmetrischen Ausbildung stark überlappen.

Anschliessend werden die Schlauchabschnitte aller Dämmelemente, wiederum durch die Anschlussstutzen 7, mit Nasser gefüllt, während die Luft durch die Entlüftungsöffnungen 6 entweicht. Dabei kann höherer Druck angewendet werden.

An Stossstellen (Fig. 6) drücken dadurch die von ihr umgebenen Endabschnitte 4, 5 der aufeinanderfolgenden Schlauchabschnitte 1a, 1a' sowie ein an dessen Endabschnitt 4 anschliessender, von derselben ebenfalls noch umfasster Teil des Mittelabschnitts 3 des Schlauchabschnitts 1a' stark gegen die Innenseite der Manschette 17. Dadurch, dass diese sich gegen ihren Aussenrand zu verengt sowie durch den starken Reibschluss zwischen ihrer Innenseite und dem an derselben anliegenden Teil der Aussenseite des folgenden Schlauchabschnitts 1a' sind die aufeinanderfolgenden Schlauchabschnitte 1a, 1a' sehr fest miteinander verbunden. Ein Auseinanderreissen der Dämmeinrichtung an den Stossstellen zwischen aufeinanderfolgenden Dämmelementen ist kaum möglich.

Nach dem Gebrauch werden die Verschlussteile 9 geöffnet und abgenommen und dadurch die Endöffnungen 8 der Schlauchabschnitte 1a,b geöffnet und dieselben entleert. In Fällen, wo die Verschlussteile 9 schwer oder gar nicht zugänglich sind, kann zuerst eine Teilentleerung durch Oeffnen der Entlüftungsöffnungen 6 oder des Anschlussstutzens 7 vorgenommen werden. Vor allfälliger Einlagerung können die Dämmelemente aufgehängt und auf diese Weise die Schlauchabschnitte 1a,b durch die Endöffnungen 8 vollständig entleert und getrocknet werden. Dafür ist es wichtig, dass die Endöffnungen 8 an den Enden der Endabschnitte 4, 5 angeordnet sind. Dagegen ist es nicht unbedingt erforderlich, dass sie quer zur Längsrichtung der Schlauchabschnitte 1a,b liegen, wenn dies auch besonders günstig ist. Vollständige Entleerung und Trocknung der Dämmelemente ist besonders dann wichtig, wenn sie wie etwa beim Hochwasserschutz nur verhältnismässig selten zum Einsatz kommen, da auf dieser Weise einer Schädigung des Materials durch Mikroben oder Pilzbefall u. dgl. während der langen Lagerzeiten vorgebeugt werden kann.

Gemäss einer zweiten Ausführungsform ist das Dämmelement als Schlauchabschnitt 1 ausgebildet, welcher in seinem Aufbau fast vollständig dem Schlauchabschnitt 1a des Dämmelements gemäss der ersten Ausführungsform entspricht. Eine Abweichung besteht darin, dass der Einfüllstutzen 7 nur geringfügig oder auch gar nicht versetzt an der Oberseite des Dämmelements angeordnet ist.

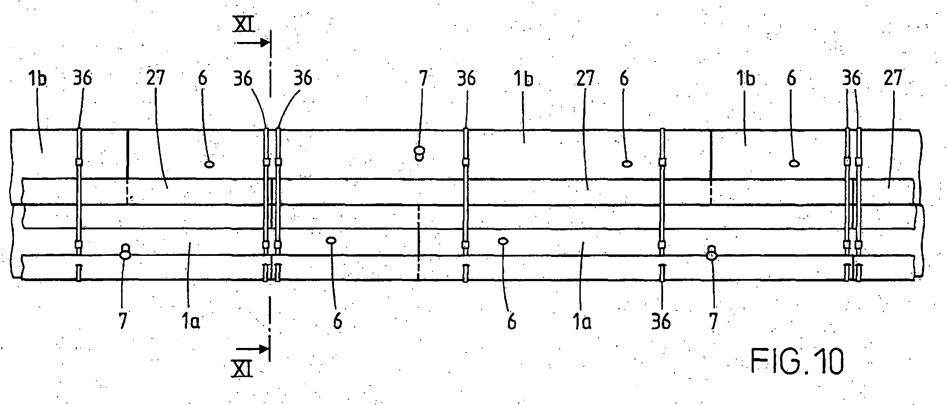

Dämmelemente gemäss der zweiten Ausführungsform werden zusammen mit Zwischenelementen 27 zum Aufbau einer Dämmeinrichtung gemäss einer zweiten Ausführungsform (Fig. 10-12) herangezogen. Die Dämmeinrichtung besteht aus zwei nebeneinander angeordneten Reihen, einer ersten, bestehend aus der abzudämmenden Flüssigkeit zugekehrten äusseren Schlauchabschnitten 1a sowie einer zweiten aus inneren Schlauchabschnitten 1b, welche um die Hälfte der Länge eines Schlauchabschnittes versetzt sind. Aufeinanderfolgende Schlauchabschnitte einer Reihe sind in der gleichen Weise verbunden wie dies für Schlauchabschnitte 1a, 1a' für Dämmeinrichtungen gemäss der ersten Ausführungsform (Fig. 6) beschrieben wurde. Die beiden Reihen von Schlauchabschnitten 1a, 1b sind durch eine Reihe von aufeinanderfolgenden Zwischenelementen 27 verbunden, welche jeweils gleich lang sind wie einer der Schlauchabschnitte 1a,b. Ausserdem ist die Reihe der Zwischenelemente 27 gegenüber jeder der beiden Reihen von Schlauchelementen 1a, 1b jeweils um ein Viertel seiner Länge versetzt, so dass die Stossstelle zwischen zwei aufeinanderfolgenden Zwischenelementen 27 von Stossstellen zwischen aufeinanderfolgenden Schlauchabschnitten jeweils maximal beabstandet ist.

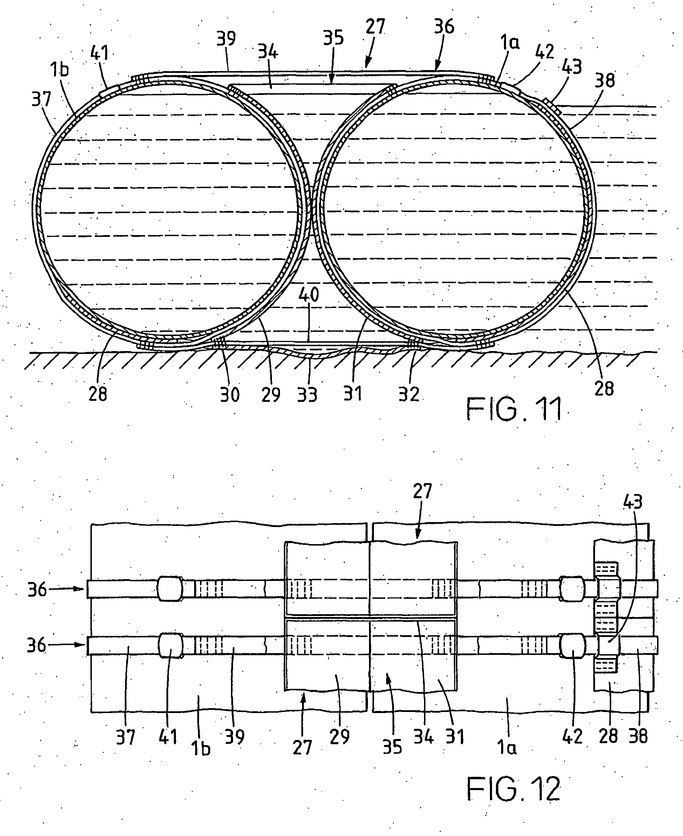

Jedes Zwischenelement 27 weist (Fig. 11) eine rechteckige Grundplane 28 auf, mit der eine ebenfalls rechteckige Innenplane 29 längs eines inneren Verbindungsstreifens 30, der einem inneren Längsrand der Grundplane 28 parallel ist und sich über deren ganze Länge erstreckt, vernäht und dicht verschweisst ist. In gleicher Weise ist eine weiter gegen den Aussenrand versetzte ebenfalls rechteckige Aussenplane 31 längs eines äusseren Verbindungsstreifens 32 mit der Grundplane 28 verbunden. Der innere Verbindungsstreifen 30 ist gegenüber dem Innenrand der ersteren Grundplane 28 um einen Abstand versetzt, der z. B. etwa einem Zehntel des Umfangs eines der Schlauchabschnitte 1a,b entspricht. Der Abstand zwischen dem inneren Verbindungsstreifen 30 und dem äusseren Verbindurigsstreifen 32 entspricht vorzugsweise etwa der Hälfte dieses Umfangs.

Der zwischen dem inneren Verbindungsstreifen 30 und dem äusseren Verbindungsstreifen 32 liegende Abschnitt der Grundplane 28 bildet einen Boden 33. Der Abstand zwischen dem äusseren Verbindungsstreifen 32 und dem äusseren Rand der Grundplane 28 entspricht ebenfalls ungefähr der Hälfte des Umfangs eines der Schlauchabschnitte 1a,b. Am vorderen und hinteren Ende der Grundplane 28 ist jeweils quer zur Längsrichtung eine Abschlusswahd, vorzugsweise eine flexible Abschlussplane 34 angebracht, welche die Form eines doppelten Zwickels aufweist. Ihr unterer Rand ist mit dem Rand des Bodens 33 vernäht und dicht verschweisst, während ihre Seitenränder in gleicher Weise mit den Randern der Innenplane 29 und der Aussenplane 31 verbunden sind. Ihr oberer Rand ist frei. Der Boden 33, die Innenplane 29, die Aussenplane 31 und die Abschlussplanen 34 bilden daher eine oben offene, im übrigen aber dichte Wanne 35. Die flexiblen Planen können aus dem gleichen oder ähnlichem Material bestehen wie die Schlauchabschnitte 1a,b.

Das Zwischenelement 27 ist mit mehreren in Längsrichtung aufeinanderfolgenden Gurtanordnungen 36 versehen, welche jeweils einen inneren Gurtring 37 und einen äusseren Gurtring 38 umfassen, welche durch einen oberen Verbindungsgurt 39 und einen unteren Verbindungsgurt 40, mit deren Enden sie vernäht sind, verbunden sind. Ausserhalb der Stellen, an denen sie mit den Verbindungsgurten 39, 40 verbunden sind, weisen die Gurtringe 37, 38 jeweils eine Schnalle 41 bzw. 42, z. B. der weiter oben beschriebenen Art oder eine Spannklemme o. dgl. auf, so dass sie dort geöffnet werden können.

Der innere Gurtringe 37 läuft vom Innenrand desselben an unterhalb der Grundplane 28, bis er knapp ausserhalb des inneren Verbindungsstreifens 30 durch einen Schlitz in der Grundplane 28 geführt wird und weiter an der dem Innenrand der Grundplane 28 zugewandten Innenseite der Innenplane 29 entlangläuft. Desgleichen läuft der äussere Gurtring 38 vom Aussenrand derselben an unterhalb der Grundplane 28 und wird durch einen Schlitz knapp ausserhalb des äusseren Verbindungsstreifens 32 durch dieselbe durchgeführt und läuft weiter an der dem Aussenrand der Grundplane 28 zugewandten Aussenseite der Aussenplane 31. Der untere Verbindungsgurt 40 läuft durch die Schlitze, durch die der innere Gurtring 37 und der äussere Gurtring 38 durch die Grundplane 28 geführt sind und am Verbindungsstreifen 30 bzw. 32 zwischen derselben und dem unteren Rand der Innenplane 29 bzw. der Aussenplane 31 durch, wobei er mit denselben dicht verschweisst ist. Alternativ kann er durch eine vorzugsweise eng anliegende schlauchartige Hülse geführt sein. Jedenfalls läuft er oberhalb der Bodenplane 33 durch die Wanne 35. Der obere Randbereich der Innenplane 29 ist mit dem inneren Gurtring 37 vernäht, ebenso der obere Randbereich der Aussenplane 31 mit dem äusseren Gurtring 38.

Auch der Aussenrandbereich der Grundplane 28 ist mit dem äusseren Gurtring 38 verbunden, z. B. indem er wie dargestellt durch eine Schlaufe 43 an der Grundplane 28 geführt oder auch mit derselben vernäht ist.

Zwei der beschriebenen Gurtanordnungen 36 sind in unmittelbarer Nähe der Enden des Zwischenelementes 27 angeordnet, die übrigen liegen, mit einem festen Abstand zwischen aufeinanderfolgenden Gurtanordnungen, der vorzugsweise zwischen 1,5 m und 2,5 m liegt, dazwischen.

Der den inneren Schlauchabschnitt 1b umgebende inneren Gurtring 37 hält den zwischen deren Innenrand und der inneren Verbindungsline 30 liegenden Teil der Grundplane 28, über dessen Aussenseite er läuft, am inneren Schlauchabschnitt 1b fest, desgleichen, durch die Verbindung mit deren Rand, die Innenplane 29, obwohl er zwischen derselben und dem inneren Schlauchabschnitt 1b durchläufe. In gleicher Weise hält der äussere Gurtring 38 den zwischen dem Aussenrand und dem äusseren Verbindungsstreifen 32 liegenden Teil der Grundplane 28 und die Aussenplane 31 am äusseren Schlauchabschnitt 1a fest, dessen Aussenseite sie fast vollständig bedeckt. Der Boden 33 ist schlaff, da seine Breite grösser ist als der Abstand zwischen den jeweils untersten Mantellinien der Schlauchabschnitte 1a und 1b.

Ist die Wanne 35 mit Wasser gefüllt, so liegt ihr Boden 33 unter dem hydrostatischen Druck des Wassers eng am Untergrund ah, wobei sie sich auch Unebenheiten ohne weiteres anpasst. Dadurch wird die Dämmwirkung der Schlauchabschnitte 1a, 1b in ausserordentlich wirksamer Weise ergänzt. Letztere stehen unter einem höheren Innendruck und sind daher verhältnismässig steif, so dass sie zwar schwer zu bewegen sind, sich aber Bodenunebenheiten nur beschränkt anpassen. Die offene Wanne 35 dagegen wird von den Schlauchabschnitten 1a, 1b im Gelände zuverlässig festgehalten, während ihr Boden 33 sich an Unebenheiten anpasst und damit der Dämmeinrichtung eine hohe Dichtigkeit verleiht. Solange der Wasserspiegel in der Wanne 35 höher ist als der der abzudämmenden Flüssigkeit, gewöhnlich Wasser, besteht auch kaum eine :Gefahr, dass die Dämmeinrichtung unterspült wird, da der hydrostatische Druck in der Wanne 35 den Boden 33 am Untergund festhält, auch wenn Flüssigkeit unter dem Schlauchabschnitt 1a durchdringt. Weitere Vorteile der beschriebenen Dämmeinrichtung liegen darin, dass vor allem der äussere Schlauchabschnitt 1a auf der besonders beanspruchten Aussenseite von einem Teil der Grundplane 28 bedeckt und dadurch besonders gut geschützt ist. Die Schlauchabschnitte 1a, 2b können besonders einfach sein, da alle Verbindungen am Zwischenelement 27 angreifen können, so dass an den Schlauchabschnitten selbst keinerlei Mittel dazu wie Schlaufen o. dgl. vorgesehen sein müssen.

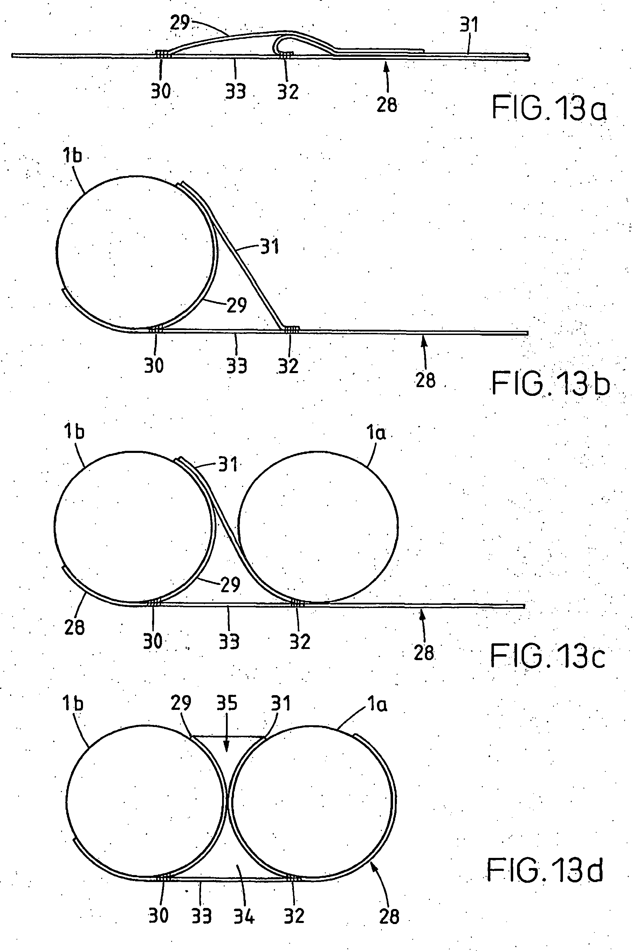

Zum Aufbau einer Dämmeinrichtung werden, wie in Fig. 13a-d schematisch dargestellt, zuerst die Zwischenelemente im Gelände ausgelegt, wobei die Innenplane 29 und die Aussenplane 31 zum Aussenrand der Gründplane 28 hin umgeschlagen sind (Fig. 13a). Dann werden die mit Luft gefüllten inneren Schlauchabschnitte 1b positioniert und mittels der Schnallen 41 die inneren Gurtringe 37 geschlossen, so dass der zwischen Innehrand und innerem Verbindungsstreifen 30 liegende Teil der Grundplane 28 und die Innenplane 29 am Schlauchabschnitt 1b anliegen. Die Aussenplane 31 wird dann umgeschlagen, so dass ihr Randbereich auf dem inneren Schlauchabschnitt 1b aufliegt (Fig. 13b). Anschliessend werden die ebenfalls luftgefüllten äussere Schlauchabschnitte 1a positioniert (Fig. 13c) und mittels der Schnallen 42 die äusseren Gurtringe 38 geschlossen, so dass der zwischen Aussenrand und äusserem Verbindurigsstreifen 32 liegende Teil der Grundplane 28 und die Aussenplane 31 am äusseren Schlauchabschnitt 1a anliegen (Fig. 13d). Anschliessend werden gewöhnlich die Wannen 35 mit Wasser gefüllt. Die Dämmeinrichtung ist dann hinreichend schwer, dass sie auch durch starken Wind nicht verschoben werden kann. Schliesslich werden die Schlauchabschnitte 1a, 1b mit Wasser gefüllt, während die Luft durch die Entlüftungsöffnungen 6 entweicht.

Falls ein Ende der Dämmeinrichtung an eine Mauer oder dergleichen anschliessen soll, so wird jeweils ein Zwischenelement so angeordnet, dass seine Abschlusswand an der Mauer anliegt. Dies führt zu guter Abdichtung, da sich die Abschlusswand und an sie angrenzende Abschnitte der Innenplane der Aussenplane und des Bodens dicht an Mauer und Boden anlegen. Die flankierenden Schlauchabschnitte können entweder in der Länge angepasst sein, so dass sie genau bis zur Abschlusswand des Zwischenelements reichen oder, wenn sie über dieselbe hinausragen, beidseits nach aussen abknickend an der Mauer anliegen, wobei sie an den knickstellen durch eine Gurt anordnung zusammengehalten werden.

Die beschriebene Dämmeinrichtung kann in vielfacher Weise abgewandelt werden. So kann die Wanne auch hergestellt werden, indem die Grundplane im Bereich der untersten Mantellinie mit dem inneren Schlauchabschnitt 1b verschweisst und lediglich aussenseitig am äusseren Schlauchabschnitt 1a hochgezogen ist oder indem die Grundplane sowohl aussenseitig am äusseren Schlauchabschnitt 1a als auch innenseitig am inneren Schlauchabschnitt 1b. hochgezogen ist. In beiden Fällen können Innenplane und Aussenplane entfallen und die Gurtanordnungen auch durch einen um beide Schlauchabschnitte 1a, 1b laufenden Gurtring ersetzt werden. Die Schlauchabschnitte können dann auch durch einen Steg wie beim Dämmelement gemäss der ersten Ausführungsform oder anderweitig verbunden sein. Allerdings ist bei solchen Ausführungen die Abdichtung der Wanne an Stossstellen problematisch, da Abschlusswände fehlen. Die Wanne kann auch gedeckt sein, entscheidend ist, dass sie bis zu einer Höhe, die der Höhe der Schlauchabschnitte 1a,b nahekommt, dicht ist und in ihr kein Ueberdruck herrscht, so dass sich der Boden 33 der Grundplane 28 eng an den Boden anlegt.

Erfindungsgemässe Dämmelemente können zahlreiche weitere Merkmale aufweisen, die u. U. zur bequemen Handhabung erforderlich sind und die hier nicht im einzelnen dargestellt worden sind wie z. B. beidseits über die Länge der Schlauchabschnitte 1a,b verteilte Tragschlaufen oder Gurte zur zusätzlichen Sicherung der Verbindung zwischen aufeinanderfolgenden Dämmelementen oder zur zusätzlichen Verankerung im Gelände.

Ein Dämmelement, das nur aus einem Schlauchabschnitt besteht, kann von mehreren über seine Länge verteilten Gurtringen, welche, jeweils über einen Teil seines Umfahgs in einer Schlaufe oder mehreren Schlaufen an seiner Aussenseite geführt sein können, umgeben sein, die der direkten Verbindung mit einem weiteren, neben dem erstgenannten angeordneten Schlauchabschnitt dienen können. Das Dämmelement kann auch ein umfassenderes Gurtsystem aufweisen, wie es etwa in WO-A-01/29 327 beschrieben ist.

Bei Dämmeinrichtungen mit zwei nebeneinander angeordneten Reihen von Schlauchabschnitten kann es von Vorteil sein, wenn mindestens stellenweise weitere schlauchabschnitte mittig auf denselben angeordnet und durch Gurte oder ähnliche Mittel befestigt werden können. Die Dämmelemente können dazu mit geeigneten Vorrichtungen wie Oesen oder anderen Verbindungseinrichtungen versehen sein. Dazu ist ebenfalls der WO-A-01/29 327 Näheres zu entnahmen.

Schliesslich kann die Verbindung aufeinanderfolgender Dämmelementen mittels Manschetten auch dort angewandt werden, wo die Endabschnitte der Schlauchabschnitte anders als beschrieben ausgebildet sind, z. B. die Schlauchabschnitte durch runde Deckel verschlossen sind. Das Gleiche gilt für die Ausbildung der Dämmeinrichtung gemäss der zweiten Ausführungsform. Auch hier können Dämmelemente mit Schlauchabschnitten konventioneller oder sonst abweichender Form der Endabschnitte zum Einsatz kommen, ohne dass die mit der Anordnung und Ausbildung der Wanne zusammenhängenden Vorteile geschmälert würden.

### Bezugszeichenliste

- 1a-d,a': Schlauchabschnitte
- 2: Steg
- 3: Mittelabschnitt
- 4, 5: Endabschnitte
- 6: Entlüftungsöffnung
- 7: Einfüllstutzen
- 8: Endöffnung
- 9: Verschlussteil
- 10a,b: Klemmplatten
- 11: Schraubenbolzen
- 12: Kopf
- 13: Mutter
- 14: äusserer Riemen
- 15: innerer Riemen
- 16: Schnalle
- 17: Manschette
- 18: Luftloch
- 19: Bodenplane
- 20: Anschlussabschnitt
- 21: Endkante
- 22: Streifen
- 23: Seele
- 24: Kedernut
- 25: Ankerschiene
- 26: Mauer
- 27: Zwischenelement
- 28: Gründplane
- 29: Innenplane
- 30: innerer Verbindungsstreifen
- 31: Aussenplane
- 32: äusserer Verbindungsstreifen
- 33: Boden
- 34: Abschlussplane
- 35: Wanne
- 36: Gurtanordnung
- 37: innerer Gurtring
- 38: äussere Gurtring
- 39: oberer Verbindungsgurt
- 40: unterer Verbindungsgurt
- 41, 42: Schnallen
- 43: Schlaufe

## Patentansprüche

1. Dämmelement zum Abdämmen von Flüssigkeiten, mit mindestens einem Schlauchabschnitt (1a, 1b), der einen Mittelabschnitt (3) konstanten Durchmessers umfasst sowie mindestens eine Einfüllöffnung aufweist sowie mindestens einen Endabschnitt (4, 5), der an einem Ende des Mittelabschnitts (3) an denselben anschliesst und, sich gegen das Ende des Schlauchabschnitts (1a, 1b) hin stetig verjüngend, in eine Endöffnung (8) ausläuft, **dadurch gekennzeichnet, dass** die Verjüngung des Endabschnitts (4, 5) asymmetrisch ist und der Endabschnitt von einer am Schlauchabschnitt (1a, 1b) verankerten Manschette (17) umgeben ist.

2. Dämmelement nach Anspruch 1, **dadurch gekennzeichnet, dass** der mindestens eine Endabschnitt (4, 5) im wesentlichen die Form eines schiefen Kegels aufweist, mit einer Mantellinie, welche eine Mantellinie des Mittelabschnitts (3) fortsetzt.

3. Dämmelement nach Anspruch 1 oder 2, **dadurch gekennzeichnet, dass** die Manschette (17) am Ende einen etwas, vorzugsweise um ca. 5%, geringeren Durchmesser aufweist als der Mittelabschnitt (3).

4. Dämmelement nach einem der Ansprüche 1 bis 3, **dadurch gekennzeichnet, dass** der mindestens eine Endabschnitt (4, 5) ein Verschlussteil (9) aufweist, das die Endöffnung (8) verschliesst.

5. Dämmelement nach einem der Ansprüche 1 bis 4, **dadurch gekennzeichnet, dass** der Durchmesser der Endöffnung (8) höchstens 20% des Durchmessers des Mittelabschnitts (3) beträgt.

6. Dämmelement nach Anspruch 4 oder 5, **dadurch gekennzeichnet, dass** das Verschlussteil (9) als Klemmteil ausgebildet ist, mittels dessen einander gegenüberliegende Ränder der Endöffnung (8) gegeneinandergepresst werden.

7. Dämmelement nach einem der Ansprüche 1 bis 6, **dadurch gekennzeichnet, dass** es eine Bodenplane (19) aus flexiblem Material umfasst, welche sich im wesentlichen über seine ganze Länge erstreckt und längs einer Mantellinie mit mindestens einem Schlauchabschnitt (1a) verbunden ist.

8. Dämmelement nach Anspruch 7, **dadurch gekennzeichnet, dass** die Bodenplane (19) mindestens einseitig seitlich über den mindestens einen Schlauchabschnitt (1a) vorsteht, vorzugsweise um mindestens die Hälfte des Durchmessers desselben.

9. Dämmelement nach einem der Ansprüche 1 bis 8, **dadurch gekennzeichnet, dass** der mindestens eine Schlauchabschnitt (1a, 1b) zwei Endabschnitte (4, 5) aufweist, welche an entgegengensetzten Enden des Mittelabschnitts (3) an denselben anschliessen und sich nach entgegengesetzten Seiten verjüngen.

10. Dämmelement nach einem der Ansprüche 1 bis 9, **dadurch gekennzeichnet, dass** es einen ersten Schlauchabschnitt (1a) und mindestens einen, im wesentlichen gleich ausgebildeten zweiten Schlauchabschnitt (1b) umfasst, welcher in Längsrichtung versetzt mit dem ersten Schlauchabschnitt (1a) verbunden ist.

11. Dämmelement nach Anspruch 10, **dadurch gekennzeichnet, dass** der erste Schlauchabschnitt (1a) und der zweite Schlauchabschnitt (1b) mindestens über die ganze Ueberlappungslänge der Mittelabschnitte (3) seitlich miteinander verbunden sind.

12. Dämmelement nach Anspruch 11, **dadurch gekennzeichnet, dass** die seitliche Verbindung durch einen mit dem ersten Schlauchabschnitt (1a) und dem zweiten Schlauchabschnitt (1b) verschweissten Steg (2) hergestellt ist.

13. Dämmelement nach einem der Ansprüche 1 bis 12, **dadurch gekennzeichnet, dass** es mehrere den mindestens einen Schlauchabschnitt umgebende Gurtringe umfasst, welche über dessen Länge verteilt an ihm befestigt sind.

14. Verfahren zur Verwendung von Dämmelementen nach einem der Ansprüche 1 bis 13 derart, dass Schlauchabschnitte (1a, 1b) der Dämmelemente erst mit Luft gefüllt und im Gelände angeordnet und ausgerichtet und zwei unmittelbar aufeinanderfolgende Dämmelemente jeweils miteinander verbunden werden, indem ein Endabschnitt (4) eines Dämmelements überlappend mit einem Endabschnitt (5) des anderen Dämmelements in die Manschette (17) des letzteren geschoben wird und die Schlauchabschnitte (1a, 1b) der Dämmelemente schliesslich mit Wasser gefüllt werden.

15. Dämmeinrichtung mit mindestens zwei in Längsrichtung aufeinanderfolgenden Dämmelementen nach einem der Ansprüche 1 bis 13, deren Schlauchabschnitte (1a, 1a') mit Wasser gefüllt sind und so aneinander anschliessend angeordnet sind, dass ihre Endabschnitte (5, 4) überlappen, derart, dass der Endabschnitte (4) des einen Schlauchabschnitts (1a') in die Manschette (17) des anderen Schlauchabschnittes (1a) eingeschoben ist.

16. Dämmeinrichtung mit mindestens einem Dämmelement nach einem der Ansprüche 1 bis 13, **dadurch gekennzeichnet, dass** sie mindestens zwei nebeneinander angeordnete Schlauchabschnitte, nämlich einen äusseren Schlauchabschnitt (1a) und einen inneren Schlauchabschnitt (1b) umfasst sowie mindestens eine zwischen den Schlauchabschnitten (1a, 1b) angeordnete wasserdichte Wanne (35) mit flexiblem Boden (33), deren Höhe mindestens annähernd die Höhe der Schlauchabschnitte (1a, 1b) erreicht.

17. Dämmeinrichtung nach Anspruch 16, **dadurch gekennzeichnet, dass** der Boden (33) der Wanne (35) von einem Abschnitt einer Grundplane (28) gebildet ist, welche derart mit den Schlauchabschnitten (1a, 1b) verbunden ist, dass der Boden (33) schlaff ist.

18. Dämmeinrichtung nach Anspruch 17, **dadurch gekennzeichnet, dass** die Grundplane (28) im wesentlichen rechteckig ist mit einem längs des äusseren Schlauchabschnittes (1a) verlaufenden Aussenrand und einem zu demselben parallelen Innenrand und dass längs eines äusseren Verbindungsstreifens (32), der parallel zum Aussenrand verläuft, eine ebenfalls im wesentlichen rechteckige Aussenplane (31) dicht an die Grundplane (28) anschliesst, welche an der dem inneren Schlauchabschnitt (1b) zugewandten Seite des äusseren Schlauchabschnitts (1a) anliegt.

19. Dämmeinrichtung nach Anspruch 18, **dadurch gekennzeichnet, dass** längs eines gegenüber dem ausseren Verbindungsstreifen (32) gegen den Innenrand versetzten inneren Verbindungsstreifens (30) eine ebenfalls im wesentlichen rechteckige Innenplane (29) dicht an die Grundplane (28) anschliesst, welche an der dem äusseren Schlauchabschnitt (1a) zugewandten Seite des inneren Schlauchabschnitts (1b) anliegt.

20. Dämmeinrichtung nach Anspruch 19, **dadurch gekennzeichnet, dass** die Wanne (35) an beiden Enden jeweils eine stirnseitige Abschlusswand, die vorzugsweise als flexible Abschlussplane (34) ausgebildet ist, aufweist, deren untere und seitliche Ränder an die stirnseitigen Ränder des Bodens (33) bzw. der Aussenplane (31) und der Innenplane (29) dicht anschliessen.

21. Dämmeinrichtung nach einem der Ansprüche 17 bis 20, **dadurch gekennzeichnet, dass** die Grundplane (28) mit einem zwischen dem äusseren Verbindungsstreifen (32) und dem Aussenrand liegenden Teil die vom inneren Schlauchabschnitt (1b) abgewandte Aussenseite des äusseren Schlauchabschnitts (1a) bedeckt.

22. Dämmeinrichtung nach einem der Ansprüche 17 bis 21, **dadurch gekennzeichnet, dass** sie mehrere über die Länge der Grundplane (28) verteilt angeordnete Gurtanordnungen (36) aufweist, welche jeweils zusammenhängen und um den äusseren Schlauchabschnitt (1a) und den inneren Schlauchabschnitt (1b) herumgeführt sind.

23. Dämmeinrichtung nach Anspruch 22, **dadurch gekennzeichnet, dass** jede Gurtanordnung (36) einen den äusseren Schlauchabschnitt (1a) umgebenden äusseren Gurtring (38) und einen den inneren Schlauchabschnitt (1b) umgebenden inneren Gurtring (37) umfasst.

24. Dämmeinrichtung nach den Ansprüchen 19 bis 21 und Anspruch 23, **dadurch gekennzeichnet, dass** der innere Gurtring (37) zwischen dem inneren Schlauchabschnitt (1b) und der Innenplane (29) durchgezogen und mit dem Randbereich derselben verbunden ist und der äussere Gurtring (38) zwischen dem äusseren Schlauchabschnitt (1a) und der Aussenplane (31) durchgezogen und mit dem Randbereich derselben verbunden ist.

25. Dämmeinrichtung nach den Ansprüchen 21 und 24, **dadurch gekennzeichnet, dass** der äussere Gurtring (38) ausserhalb des äusseren Verbindungsstreifens (32) durch die Grundplane (28) durchgeführt ist und bis zum Aussenrand derselben an ihrer Aussenseite verläuft.

26. Dämmeinrichtung nach einem der Ansprüche 22 bis 25, **dadurch gekennzeichnet, dass** jede Gurtanordnung (36) einen oberen Verbindungsgurt (39) und einen unteren Verbindungsgurt (40) umfasst, wobei der untere Verbindungsgurt (40) oberhalb des Bodens (33) durch die Wanne (35) geführt ist.

27. Dämmeinrichtung nach einem der Ansprüche 17 bis 26, **dadurch gekennzeichnet, dass** die Wanne (35) von mindestens einem Zwischenelement (27) gebildet wird, das lösbar mit den Schlauchabschnitten (1a, 1b) verbunden ist.

28. Dämmeinrichtung nach Anspruch 27, **dadurch gekennzeichnet, dass** sie zwei Reihen von in Längsrichtung aufeinanderfolgenden äusseren Schlauchabschnitten (1a) und aufeinanderfolgenden inneren Schlauchabschnitten (1b) sowie eine Reihe von aufeinanderfolgenden Zwischenelementen (27) umfasst, welche derart angeordnet sind, dass die Stossstellen zwischen jeweils unmittelbar aufeinanderfolgenden äusseren Schlauchabschnitten (1a), inneren Schlauchabschnitten (1b) und Zwischenelementen (27) gegeneinander versetzt sind.

## Claims

1. Damming element for damming liquids, with at least one tubular section (1a, 1b) which has a middle section (3) of constant diameter, as well as at least one filling opening and at least one end section (4, 5) which at one end of the middle section (3) adjoins the latter and, constantly tapering towards the end of the tubular section (1a, 1b), ends in an end opening (8), **characterised in that** the tapering of the end section (4, 5) is asymmetrical and the end section is surrounded by a cuff (17) anchored on the tubular section (1a, 1b).

2. Damming element according to claim 1, **characterised in that** at least one end section (4, 5) is essentially in the shape of an oblique cone, with a surface line, which continues a surface line of the middle section (3).

3. Damming element according to claim 1 or 2, **characterised in that** at its end the cuff (17) has a slightly, preferably around 5%, smaller diameter than in the middle section (3).

4. Damming element according to any one of claims 1 to 3, **characterised in that** the at least one end section (4, 5) has a closing part (9) which closes the end opening (8).

5. Damming element according to any one of claims 1 to 4, **characterised in that** the diameter of the end opening (8) is at most 20% of the diameter of the middle section (3).

6. Damming element according to claim 4 or 5, **characterised in that** the closing piece (9) is in the form of a clamping piece, by means of which opposite edges of the end opening (8) can be pressed against each other.

7. Damming element according to any one of claims 1 to 6, characterised it comprises a ground sheet (19) of flexible material which essentially extends over its entire length and is connected with at least one tubular section (1a) along a surface line.

8. Damming element according to claim 7, **characterised in that** at least on one side the ground sheet (19) projects laterally beyond the at least one tubular section (1a), preferably by at least half the diameter of the latter.

9. Damming element according to any one of claims 1 to 8, **characterised in that** the at least one tubular section (1a, 1b) has two end sections (4, 5) which adjoin the middle section (3) at opposite ends thereof and taper towards opposite sides.

10. Damming element according to any one of claims 1 to 9, **characterised in that** it comprises a first tubular section (1a) and at least one, essentially identically constituted, second tubular section (1b), which is connected to the first tubular section (1a) in a manner offset in the longitudinal direction.

11. Damming element according to claim 10, **characterised in that** the first tubular section (1a) and the second tubular section (1b) are laterally connected to each other at least over the entire overlapping length of the middle sections (3).

12. Damming element according to claim 11, **characterised in that** the lateral connection is produced by a web (2) welded to the first tubular section (1a) and the second tubular section (1b).

13. Damming element according to any one of claims 1 to 12, **characterised in that** it comprises several strap rings surrounding the at least one tubular section which are fastened thereto distributed over its length.

14. Method of using damming elements according to any one of claims 1 to 13 in such a way that tubular sections (1a, 1b) of the damming elements are first filled with air and arranged and aligned on the terrain and two directly consecutive damming elements are each connected to each other in that one end section (4) of one damming element, overlapping with an end section (5) of the other damming element is inserted into the cuff (17) of the latter and tubular sections (1a, 1b) of the damming elements are finally filled with water.

15. Damming device with at least two longitudinally consecutive damming elements according to any one of claims 1 to 13, the tubular sections (1a, 1a') of which are filled with water and are arranged adjoining each other so that their end sections (5, 4) overlap in such a way that the end section (4) of one tubular section (1a') is inserted into the cuff (17) of the other tubular section (1a).

16. Damming device with at least one damming element according to any one of claims 1 to 13, **characterised in that** it comprises at least two adjacently arranged tubular sections, namely an outer tubular section (1a) and an inner tubular section (1b) as well as, arranged between the tubular sections (1a, 1b), at least one watertight vat (35) with a flexible base (33), the height of which reaches at least approximately the height of the tubular sections (1a, 1b).

17. Damming device according to claim 16, **characterised in that** the base (33) of the vat (35) is formed by a section of the ground sheet (28) which is connected to the tubular sections (1a, 1b) in such a way that the base (33) is slack.

18. Damming device according to claim 17, **characterised in that** the ground sheet (28) is essentially rectangular with an outer edge running along the outer tubular section (1a) and an inner edge parallel thereto, and that along an outer connection strip (32), running in parallel with the outer edge, an also essentially rectangular outer sheet (31) tightly adjoins the ground sheet (28), which is in contact with the side of the outer tubular section (1a) facing the inner tubular section (1b).

19. Damming device according to claim 18, **characterised in that** along an inner connection strip (30) offset with respect to the outer connection strip (32) against the inner edge, an also essentially rectangular inner sheet (29) tightly adjoins the ground sheet (28) which is in contact with the side of the inner tubular section (1b) facing the outer tubular section (1a).

20. Damming device according to claim 19, **characterised in that** at each end the vat (35) has an end barrier, preferably constituted as a flexible end barrier (34), the lower and lateral edges of which tightly adjoin the end edges of the base (33) or of the outer sheet (31) and the inner sheet (29).

21. Damming device according to any one of claims 17 to 20, **characterised in that** with a section lying between the outer connection strip (32) and the outer edge, the ground sheet (28) covers the outer side of the outer tubular section (1a) facing away from the inner tubular section (1b).

22. Damming device according to any one of claims 17 to 21, **characterised in that** it comprises several strap arrangements (36) arranged distributed over the length of the ground sheet (28) which are each joined together and surround the outer tubular section (1a) and the inner tubular section (1b).

23. Damming device according to claim 22, **characterised in that** each strap arrangement (36) comprises an outer strap ring (38) surrounding the outer tubular section (1a) and an inner strap ring (37) surrounding the inner tubular section (1b).

24. Damming device according to claims 19 to 21 and claim 23, **characterised in that** the inner strap ring (37) is pulled through between the inner tubular section (1b) and the inner sheet (29) and connected with the edge area thereof, and the outer strap ring (38) is pulled through between the outer tubular section (1a) and the outer sheet (31) and connected with the edge area thereof.

25. Damming device according to claims 21 and 24, **characterised in that** outside of the outer connection strip (32) the outer strap ring (38) is passed through the ground sheet (28) and extends to the outer edge thereof on its outer side.

26. Damming device according to any one of claims 22 to 25, **characterised in that** each strap arrangement (36) comprises an upper connection strap (39) and a lower connection strap (40), wherein the lower connection strap (40) passes through the vat (35) above the base (33).

27. Damming device according to any one of claims 19 to 26, **characterised in that** the vat (35) is formed of at least one intermediate element (27) that is detachably connected with the tubular sections (1a, 1b).

28. Damming device according to claim 27, **characterised in that** it comprises two rows of longitudinally consecutive outer tubular sections (1a) and consecutive inner tubular sections (1b) as well as a row of consecutive intermediate elements (27) which are arranged in such a way that the contact points between directly consecutive outer tubular sections (1a), inner tubular sections (1b) and intermediate elements (27) are offset with regard to each other.

## Revendications

1. Élément d'endiguement pour endiguer des liquides, avec au moins un tronçon de tuyau (1a, 1b), qui comprend un tronçon central (3) de diamètre constant et qui comporte au moins un orifice de remplissage ainsi qu'au moins un tronçon terminal (4, 5) qui fait suite au tronçon central (3) à une extrémité de celui-ci et qui se transforme en un orifice terminal (8) en se rétrécissant régulièrement jusqu'à l'extrémité du tronçon de tuyau (1a, 1b), **caractérisé en ce que** le rétrécissement du tronçon terminal (4, 5) est asymétrique et **en ce que** le tronçon terminal est entouré d'une manchette (17) fixée sur le tronçon de tuyau (1a, 1b).

2. Élément d'endiguement selon la revendication 1, **caractérisé en ce que** l'au moins un tronçon terminal (4, 5) a globalement la forme d'un cône asymétrique, avec une ligne enveloppante qui prolonge une ligne enveloppante du tronçon central (3).

3. Élément d'endiguement selon la revendication 1 ou 2, **caractérisé en ce que** la manchette (17) présente à son extrémité un diamètre un peu plus petit, de préférence de 5 % environ, que le tronçon central (3).

4. Élément d'endiguement selon l'une des revendications 1 à 3, **caractérisé en ce que** l'au moins un tronçon terminal (4, 5) comporte une partie de fermeture (9) qui ferme l'orifice terminal (8).

5. Élément d'endiguement selon l'une des revendications 1 à 4, **caractérisé en ce que** le diamètre de l'orifice terminal (8) vaut au maximum 20 % du diamètre du tronçon central (3).

6. Élément d'endiguement selon la revendication 4 ou 5, **caractérisé en ce que** la partie de fermeture (9) est conçue comme une partie de serrage au moyen de laquelle des bords opposés de l'orifice terminal (8) sont pressés l'un contre l'autre.

7. Élément d'endiguement selon l'une des revendications 1 à 6, **caractérisé en ce qu**'il comprend une bâche de fond (19) en un matériau souple qui s'étend globalement sur toute sa longueur et qui est assemblée à au moins un tronçon de tuyau (1a) le long d'une ligne enveloppante.

8. Élément d'endiguement selon la revendication 7, **caractérisé en ce que** la bâche de fond (19) dépasse au moins d'un côté, latéralement, de l'au moins un tronçon de tuyau (1a), de préférence au moins de la moitié du diamètre de celui-ci.

9. Élément d'endiguement selon l'une des revendications 1 à 8, **caractérisé en ce que** l'au moins un tronçon de tuyau (1a, 1b) comporte deux tronçons terminaux (4, 5) qui font suite au tronçon central (3) aux extrémités opposées de celui-ci et qui se rétrécissent vers des côtés opposés.

10. Élément d'endiguement selon l'une des revendications 1 à 9, **caractérisé en ce qu**'il comprend un premier tronçon de tuyau (1a) et au moins un deuxième tronçon de tuyau (1b) qui est conçu globalement à l'identique et qui est assemblé au premier tronçon de tuyau (1a) avec un décalage dans le sens de la longueur.

11. Élément d'endiguement selon la revendication 10, **caractérisé en ce que** le premier tronçon de tuyau (1a) et le deuxième tronçon de tuyau (1b) sont assemblés latéralement l'un à l'autre au moins sur toute la longueur de chevauchement des tronçons centraux (3).

12. Élément d'endiguement selon la revendication 11, **caractérisé en ce que** l'assemblage latéral est réalisé par une traverse (2) soudée au premier tronçon de tuyau (1a) et au deuxième tronçon de tuyau (1b).

13. Élément d'endiguement selon l'une des revendications 1 à 13, **caractérisé en ce qu**'il comprend plusieurs anneaux de ceinture qui entourent au moins un tronçon de tuyau et qui sont fixés à celui-ci de manière répartie sur toute sa longueur.

14. Procédé d'utilisation d'éléments d'endiguement selon l'une des revendications 1 à 13, de telle sorte que des tronçons de tuyau (1a, 1b) des éléments d'endiguement sont d'abord remplis d'air puis agencés sur le terrain et alignés et que deux éléments d'endiguement qui se suivent directement sont assemblés l'un à l'autre par le fait qu'un tronçon terminal (4) d'un élément d'endiguement est poussé dans la manchette (17) de l'autre élément d'endiguement en chevauchant un tronçon terminal (5) de ce dernier et que les tronçons de tuyau (1a, 1b) des éléments d'endiguement sont finalement remplis d'eau.

15. Dispositif d'endiguement avec au moins deux éléments d'endiguement selon l'une des revendications 1 à 13 qui se suivent dans le sens de la longueur et dont les tronçons de tuyau (1a, 1a') sont remplis d'eau et sont agencés et raccordés de telle sorte l'un à la suite de l'autre que leurs tronçons terminaux (5, 4) se chevauchent de telle sorte que le tronçon terminal (4) d'un tronçon de tuyau (1a') est inséré dans la manchette (17) de l'autre tronçon de tuyau (1a).

16. Dispositif d'endiguement avec au moins un élément d'endiguement selon l'une des revendications 1 à 13, **caractérisé en ce qu**'il comprend au moins deux tronçons de tuyau agencés l'un à côté de l'autre, à savoir un tronçon de tuyau extérieur (1a) et un tronçon de tuyau intérieur (1b), ainsi qu'au moins une cuvette (35), étanche à l'eau et à fond souple (33), qui est agencée entre les tronçons de tuyau (1a, 1b) et dont la hauteur atteint au moins approximativement la hauteur des tronçons de tuyau (1a, 1b).

17. Dispositif d'endiguement selon la revendication 16, **caractérisé en ce que** le fond (33) de la cuvette (35) est formé par un tronçon d'une bâche de base (28) qui est assemblée de telle sorte aux tronçons de tuyau (1a, 1b) que le fond (33) est mou.

18. Dispositif d'endiguement selon la revendication 17, **caractérisé en ce que** la bâche de base (28) est globalement rectangulaire avec un bord extérieur s'étendant le long du tronçon de tuyau extérieur (1a) et avec un bord intérieur parallèle au bord extérieur et **en ce que**, le long d'une bande de liaison extérieure (32) qui s'étend parallèlement au bord extérieur, une bâche extérieure (31) également globalement rectangulaire est raccordée de manière étanche à la bâche de base (28), laquelle bâche extérieure est appuyée contre celui des côtés du tronçon de tuyau extérieur (1a) qui est proche du tronçon de tuyau intérieur (1b).

19. Dispositif d'endiguement selon la revendication 18, **caractérisé en ce que,** le long d'une bande de liaison intérieure (30) décalée contre le bord intérieur par rapport à la bande de liaison extérieure (32), une bâche intérieure (29) également globalement rectangulaire est raccordée de manière étanche à la bâche de base (28), laquelle bâche intérieure est appuyée contre celui des côtés du tronçon de tuyau intérieur (1b) qui est proche du tronçon de tuyau extérieur (1a).

20. Dispositif d'endiguement selon la revendication 19, **caractérisé en ce que** la cuvette (35) comporte aux deux extrémités à chaque fois une paroi de fermeture frontale qui est conçue de préférence comme une bâche de fermeture souple (34) dont les bords inférieurs et latéraux sont raccordés de manière étanche aux bords frontaux du fond (33) ou de la bâche extérieure (31) et de la bâche intérieure (29).

21. Dispositif d'endiguement selon l'une des revendications 17 à 20, **caractérisé en ce que** la bâche de base (28) couvre avec une partie située entre la bande de liaison extérieure (32) et le bord extérieur le côté extérieur, éloigné du tronçon de tuyau intérieur (1b), du tronçon de tuyau extérieur (1a).

22. Dispositif d'endiguement selon l'une des revendications 17 à 21, **caractérisé en ce qu'**il comporte plusieurs systèmes de ceinture (36) qui sont agencés de manière répartie sur toute la longueur de la bâche de base (28) et qui sont accrochés à chaque fois les uns aux autres et sont guidés autour du tronçon de tuyau extérieur (1a) et du tronçon de tuyau intérieur (1b).

23. Dispositif d'endiguement selon la revendication 22, **caractérisé en ce que** chaque système de ceinture (36) comprend un anneau de ceinture extérieur (38) entourant le tronçon de tuyau extérieur (1a) et un anneau de ceinture intérieur (37) entourant le tronçon de tuyau intérieur (1b).

24. Dispositif d'endiguement selon les revendications 19 à 21 et la revendication 23, **caractérisé en ce que** l'anneau de ceinture intérieur (37) est tiré entre le tronçon de tuyau intérieur (1b) et la bâche intérieure (29) et est assemblé à la zone de bord de celle-ci et l'anneau de ceinture extérieur (38) est tiré entre le tronçon de tuyau extérieur (1a) et la bâche extérieure (31) et est assemblé à la zone de bord de celle-ci.

25. Dispositif d'endiguement selon les revendications 21 et 24, **caractérisé en ce que** l'anneau de ceinture extérieur (38) est guidé en dehors de la bande de liaison extérieure (32) à travers la bâche de base (28) et s'étend jusqu'au bord extérieur de celle-ci au niveau de son côté extérieur.

26. Dispositif d'endiguement selon l'une des revendications 22 à 25, **caractérisé en ce que** chaque système de ceinture (36) comprend une ceinture de liaison supérieure (39) et une ceinture de liaison inférieure (40), la ceinture de liaison inférieure (40) étant guidée au-dessus du fond (33) à travers la cuvette (35).

27. Dispositif d'endiguement selon l'une des revendications 17 à 26, **caractérisé en ce que** la cuvette (35) est formée par au moins un élément intermédiaire (27) qui est assemblé de manière amovible aux tronçons de tuyau (1a, 1b).

28. Dispositif d'endiguement selon la revendication 27, **caractérisé en ce qu'**il comprend deux rangées de tronçons de tuyau extérieurs (1a) qui se succèdent dans le sens la longueur et de tronçons de tuyau intérieurs (1b) qui se succèdent dans le sens la longueur ainsi qu'une rangée d'éléments intermédiaires qui se succèdent, lesquels sont agencés de telle sorte que les points de raccord entre des tronçons de tuyau extérieurs (1a), tronçons de tuyau intérieurs (1b) et éléments intermédiaires (27) qui se succèdent à chaque fois directement sont décalés les uns par rapport aux autres.
